# EUROPÄISCHE PATENTSCHRIFT

(11) **EP 0 856 119 B1**
(45) Veröffentlichungstag und Bekanntmachung des Hinweises auf die Patenterteilung: **10.05.2000**
(21) Anmeldenummer: 96932457.3
(22) Anmeldetag: 02.10.1996
(51) Int. Cl.: F16L 55/46, F16L 55/26

(54) **VERFAHREN UND EINRICHTUNG ZUM EINFÜHREN EINES SELBSTFAHRENDEN ROHRINNENMANIPULATORS IN EINE ROHRLEITUNG**
PROCESS AND DEVICE FOR INTRODUCING A SELF-PROPELLED "MOUSE" INTO A PIPE
PROCEDE ET DISPOSITIF POUR L'INTRODUCTION D'UN MANIPULATEUR DU TYPE CHARIOT, AUTOPROPULSE, A L'INTERIEUR D'UNE CONDUITE

(30) Priorität: 16.10.1995 DE 19538442
(43) Veröffentlichungstag der Anmeldung: 05.08.1998
(73) Patentinhaber: SIEMENS AKTIENGESELLSCHAFT, 80333 München (DE)
(72) Erfinder: DIPPEL, Bruno, D-91099 Poxdorf (DE); STROBEL, Reinhardt, D-90471 Nürnberg (DE)
(86) Internationale Anmeldenummer: DE9601902
(87) Internationale Veröffentlichungsnummer: WO9714911

(56) Entgegenhaltungen:
- EP-A- 0 656 449
- EP-A- 0 666 474
- FR-A- 2 211 622
- FR-A- 2 381 657
- US-A- 5 025 670

## Beschreibung

Die Erfindung bezieht sich auf ein Verfahren und eine Einrichtung zum Einführen eines selbstfahrenden Rohrinnenmanipulators in eine Rohrleitung.

Rohrleitungen in sicherheitstechnisch relevanten Anlagenteilen, beispielsweise im Primärkreis eines Kernkraftwerkes, müssen regelmäßigen Prüf- oder Wartungsarbeiten unterzogen werden. Insbesondere ist eine regelmäßige Innenprüfung der Schweißnähte solcher Rohrleitungen erforderlich. Die zum Prüfen oder Bearbeiten notwendigen Geräte werden dabei in der Regel von selbstfahrenden Fahrzeugen in Prüf- bzw. Arbeitsposition gebracht.

Solche selbstfahrenden Rohrinnenmanipulatoren sind beispielsweise aus der deutschen Patentschrift 34 12 519 C2 bekannt. Dort ist ein Rohrinnenmanipulator offenbart, bei dem zwischen zwei Stützflanschen ein radial verstellbarer Prüfsystemträger angeordnet ist, der um die Längsachse des Rohrinnenmanipulators gedreht werden kann und auf diese Weise eine Prüfung der Innenoberfläche des Rohres auf dem gesamten Umfang ermöglicht.

Aus der europäischen Patentschrift 0 204 694 ist ein Rohrinnenmanipulator bekannt, bei dem eine Bearbeitungsvorrichtung auf einem auf Rädern fahrbaren Fahrgestell in einem Drehbügel gelagert ist, der an einem an der Stirnseite des Fahrzeugs drehbar angeordneten Lager mit L-förmigem Querschnitt angebracht ist.

Bei der Prüfung oder Bearbeitung von Rohrleitungen ergibt sich unter anderem das Problem, daß sich die zu prüfenden oder zu bearbeitenden Schweißnähte unmittelbar hinter der Öffnung befinden können, durch die der Rohrinnenmanipulator in das Rohr eingeführt werden muß. Solche unmittelbar an der Rohröffnung liegenden Schweißnähte können dann beispielsweise mit dem aus der deutschen Patentschrift 34 12 519 C2 bekannten Rohrinnenmanipulator prinzipiell nicht erfaßt werden, da dieser erst dann einsatzbereit ist, wenn er mit seinen beiden Stützflanschen vollständig im Rohr positioniert ist. Bei der aus der europäischen Patentschrift 0 204 694 bekannten Ausführungsform ist zwar prinzipiell eine Prüfung oder eine Bearbeitung im Randbereich eines Rohres möglich, jedoch ist es unter Umständen erforderlich, den Rohrinnenmanipulator umzusetzen und in entgegengesetzter Richtung erneut in das Rohr einzuführen, wenn Prüf- oder Arbeitspositionen am Anfangs- und Endbereich eines Rohres erfaßt werden sollen.

Die Schrift FR-A- 2 381 657 offenbart ein Verfahren bzw. eine Vorrichtung, die dem jeweiligen Oberbegriff der Ansprüche 1 und 5 entsprechen.

Der Erfindung liegt nun die Aufgabe zugrunde, ein Verfahren zum Einführen eines selbstfahrenden Rohrinnenmanipulators in eine Rohrleitung anzugeben, das auch eine Prüfung oder eine Bearbeitung an Positionen ermöglicht, die unmittelbar im Öffnungs-, Mündungs- oder Eingangsbereich des Rohres liegen. Außerdem liegt der Erfindung die Aufgabe zugrunde, eine Einrichtung zur Durchführung des Verfahrens anzugeben.

Die erstgenannte Aufgabe wird gelöst mit den Merkmalen des Patentanspruches 1 und die zweitgenannte Aufgabe wird gelöst mit den Merkmalen des Patentanspruches 5.

Bei dem Verfahren gemäß der Erfindung zum Einführen eines selbstfahrenden Rohrinnenmanipulators in eine Rohrleitung wird ein den Rohrinnenmanipulator aufnehmender, an wenigstens einer Stirnseite offener Hohlkörper an einer Öffnung der Rohrleitung positioniert, von dem aus der Rohrinnenmanipulator selbstätig in die Rohrleitung einfahren kann.

Auf diese Weise kann der Prüfmanipulator Prüf- oder Arbeitspositionen unmittelbar an der Rohröffnung anfahren, da der Hohlkörper eine Art Verlängerung des Rohres darstellt und eine Fixierung des Rohrinnenmanipulators bereits dann erlaubt, wenn er noch nicht oder nur teilweise in die Rohrleitung eingefahren ist. Auf diese Weise kann der Rohrinnenmanipulator auch Prüf- und Arbeitspositionen erfassen, die sich am Anfangs- oder Endbereich eines Rohres befinden. Die Funktion des verwendeten Hohlkörpers geht somit über die Funktion einer Einführhilfe für nicht selbstätig, von außen vorgeschobene Rohrinnenmanipulatoren hinaus, wie sie beispielsweise aus der GB 2 247 505 A bekannt ist. Dort ist lediglich eine Rutsche offenbart, mit deren Hilfe eine über eine biegsame Plastikstange vorschiebbare Kamera in eine quer zu einem Anschlußstutzen verlaufende Rohrleitung eingefädelt werden kann.

Vorzugsweise wird als Hohlkörper ein Hohlzylinder verwendet, der insbesondere mittig zur Öffnung der Rohrleitung positioniert wird.

In einer insbesondere zum Einführen eines selbstfahrenden Rohrinnenmanipulators in eine von einem nuklearen Dampferzeuger abzweigende Rohrleitung geeigneten Ausgestaltung der Erfindung wird der Hohlkörper schwenkbar an einem Galgen fixiert. Mit Hilfe dieses Galgens wird der Hohlkörper durch ein Mannloch des Dampferzeugers in den Dampferzeuger eingeführt und dort durch Verschieben des Galgens und durch Schwenken über eine Öffnung der Rohrleitung derart positioniert, daß die Mittenachse des Hohlkörpers und die Mittenachse der Rohrleitung im Bereich dieser Öffnung annähernd miteinander fluchten.

Die Einrichtung zum Einführen eines selbstfahrenden Rohrinnenmanipulators in das Innere einer Rohrleitung umfaßt gemäß der Erfindung einen den Rohrinnenmanipulator aufnehmbaren Hohlkörper, der an wenigstens einer Stirnseite offen und an einer Positioniereinrichtung angeordnet ist, mit der er an einer Öffnung der Rohrleitung derart positionierbar ist, daß er selbstätig in die Rohrleitung einfahren kann.

Die Positioniereinrichtung umfaßt einen verschiebbaren Galgen, an dem der Hohlkörper schwenkbar angeordnet ist.

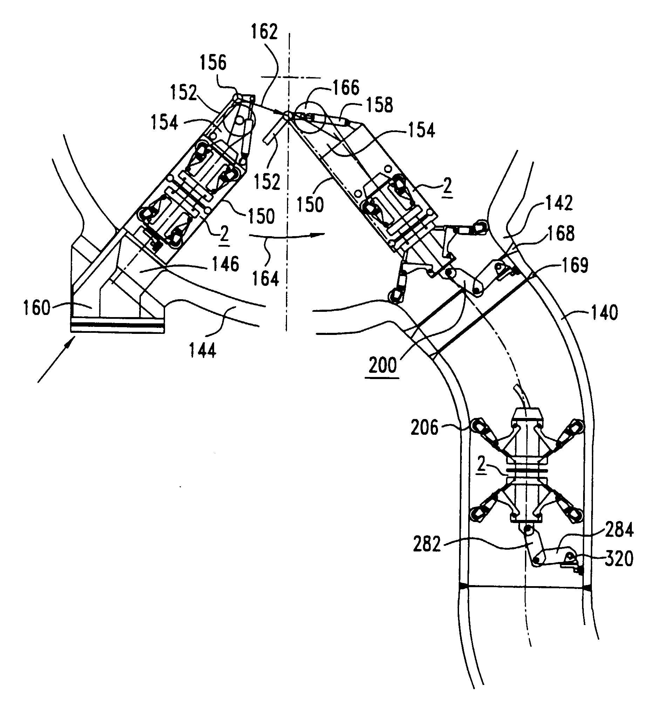

Zur weiteren Erläuterung der Erfindung wird auf das Ausführungsbeispiel der Zeichnung verwiesen, in deren einziger Figur das Einbringen eines Rohrinnenmanipulators in eine Rohrleitung des Primärkreises eines Kernkraftwerkes schematisch veranschaulicht ist.

Gemäß der Figur führt eine Rohrleitung 140 im Primärkreis eines Kernkraftwerks mit Druckwasserreaktor von einem Stutzen 142 in einer Kalotte eines Dampferzeugers 144 zu einer in der Zeichnung nicht dargestellten Pumpe. Durch diese vom Stutzen 142 gebildete Öffnung, die nur über ein relativ enges Mannloch 146 des Dampferzeugers 144 zu erreichen ist, muß ein selbstfahrender Rohrinnenmanipulator 2 eingefahren werden. Der Rohrinnenmanipulator 2 wird hierzu in einen rohrförmigen, an seinen beiden Stirnseiten offenen, hohlzylindrischen Hohlkörper 150 eingebracht und gemeinsam mit dem Hohlkörper 150 mit Hilfe eines durch das Mannloch 146 in den Dampferzeuger 144 hineinragenden Galgens 152 über dem Stutzen 142 positioniert. Der Hohlkörper 150 ist hierzu mit einem schalenförmigen Tragrahmen 154 versehen, der in einem Schwenklager 156 am Galgen 152 um eine senkrecht zum Galgen 152 verlaufende Drehachse schwenkbar gelagert ist. Diese Schwenkbewegung wird mit einem Hydraulikzylinder 158 durchgeführt, der zwischen dem Hohlkörper 150 und dem Galgen gelagert ist.

Der Galgen 152 ist auf einem außerhalb des Dampferzeugers 144 positionierbaren Traggestell 160 montiert und wird so ausgerichtet, daß die Drehachse seines Schwenklagers 156 senkrecht zu der von den Mittenachsen des Stutzens 142 und des Mannlochs 146 aufgespannten Ebene orientiert ist. Durch eine Linearverschiebung des Galgens 152, die in der Figur durch einen Pfeil 162 veranschaulicht ist, wird das Schwenklager 156 annähernd auf der Winkelhalbierenden zwischen diesen Mittenachsen positioniert, so daß eine einfache, durch einen Pfeil 164 angedeutete Schwenkbewegung eine hinreichend exakte, koaxial zur Mittenachse des Stutzen 142 ausgerichtete Positionierung des Hohlkörpers 150 ermöglicht.

Am Tragrahmen 154 ist außerdem eine Umlenkrolle 166 für die zur Versorgung des Rohrinnenmanipulators 2 erforderlichen Kabel sowie für ein Bergeseil angeordnet, mit dem der Rohrinnenmanipulator 2 im Versagensfall aus der Rohrleitung 140 geborgen werden kann.

Der in der Figur beispielhaft dargestellte Rohrinnenmanipulator 2 enthält einen an seiner Stirnseite angeordneten Schwenkarm 200 mit zwei schwenkbaren Zwischengliedern 282 und 284 sowie einem schwenkbaren Endglied 320, der nahezu vollständig in das Innere des Fahrgestells zurückgefahren werden kann. Außerdem ist der Rohrinnenmanipulator 2 mit mehreren, beispielsweise sechs oder acht, Rollen 206 versehen, die ausstellbar am Grundkörper des Rohrinnenmanipulators 2 gelagert sind. Mit einem solchen Rohrinnenmanipulator 2 können auch unter räumlich beengten Verhältnissen schwer zugängliche Rohrleitungen 140 erreicht werden, da dieser im Ausgangszustand relativ kleine Abmessungen aufweist. Durch die relativ weit ausstellbaren Rollen 206 sind außerdem die Anforderungen an die Genauigkeit des Positionierens des Hohlkörpers 150 über der Öffnung verringert, da der Rohrinnenmanipulator 2 auch dann noch in die Rohrleitung 140 einfahren kann, wenn seine Mittenachse und die Mittenachse der Öffnung nicht exakt miteinander fluchten.

In der Figur ist der Rohrinnenmanipulator 2 in verschiedenen Arbeitspositionen dargestellt. Dabei ist zu erkennen, daß der Hohlkörper 150 nicht nur die Funktion erfüllt, den Rohrinnenmanipulator 2 an die zum Einführen in die Rohrleitung 140 geeignete Stelle zu positionieren, sondern darüber hinaus auch noch ermöglicht, daß mit Hilfe des Rohrinnenmanipulators 2 unmittelbar am Anfang der Rohrleitung positionierte Schweißnähte, im Beispielsfall Schweißnähte 168, 169 am Stutzen 142 des Dampferzeugers 144, geprüft werden können, ohne daß der Rohrinnenmanipulator 2 nach Prüfen der tiefer in der Rohrleitung 140 gelegenen Schweißnähte nochmals in umgekehrter Richtung in die Rohrleitung 140 eingeführt werden muß. Nach Ausfahren des Schwenkarms 200 kann der Rohrinnenmanipulator 2 bereits mit der Prüfung beginnen, wenn sich das Fahrgestell noch vollständig oder wie explizit in der Figur dargestellt noch teilweise innerhalb des Hohlkörpers 150 befindet. Dies ermöglicht eine Prüfung aller Schweißnähte der Rohrleitung 140, ohne daß hierzu ein Umsetzen des Rohrinnenmanipulators 2 erforderlich ist.

Prinzipiell können jedoch auch andere Rohrinnenmanipulatoren, wie sie beispielsweise aus den eingangs erwähnten Druckschriften bekannt sind, mit Hilfe der erfindungsgemäßen Einrichtung in ein Rohr eingeführt werden, wobei es je nach konstruktiver Gestaltung des Rohrinnenmanipulators im Einzelfall erforderlich sein kann, einen Hohlkörper zu verwenden, der in seinen Abmessungen an die Abmessungen der Öffnung der Rohrleitung angepaßt ist und relativ exakt fluchtend mit der Rohrleitung an der Öffnung positioniert werden muß.

## Patentansprüche

1. Verfahren zum Einführen eines selbstfahrenden Rohrinnenmanipulators (2) in eine von einem nuklearen Dampferzeuger (144) abzweigende Rohrleitung (140), bei dem ein den Rohrinnenmanipulator (2) aufnehmender, an wenigstens einer Stirnseite offener Hohlkörper (150) verwendet wird,
**dadurch gekennzeichnet,**
- daß der Hohlkörper (150) im Dampferzeuger (144) an einer Öffnung der Rohrleitung (140) positioniert wird, und
- daß der Rohrinnenmanipulator (2) von dem Hohlkörper (150) aus selbsttätig in die Rohrleitung (140) einfährt.

2. Verfahren nach Anspruch 1, bei dem als Hohlkörper (150) ein Hohlzylinder verwendet wird.

3. Verfahren nach Anspruch 1 oder 2, bei dem der Hohlkörper (150) mittig zur Öffnung der Rohrleitung (140) positioniert wird.

4. Verfahren nach einem der vorhergehenden Ansprüche, bei dem der Hohlkörper (150)
a) schwenkbar an einem Galgen (152) fixiert,
b) mit Hilfe dieses Galgens (152) durch ein Mannloch (146) des Dampferzeugers (144) in den Dampferzeuger (144) eingeführt und
c) dort durch Verschieben des Galgens (152) und durch Schwenken über einer Öffnung der Rohrleitung (140) derart positioniert wird, daß die Mittenachse des Hohlkörpers (150) und die Mittenachse der Rohrleitung (140) im Bereich dieser Öffnung annähernd miteinander fluchten.

5. Einrichtung zum Einführen eines selbstfahrenden Rohrinnenmanipulators (2) in das Innere einer Rohrleitung (140), die zur Aufnahme des Rohrinnenmanipulators (2) einen Hohlkörper (150) umfaßt, der an wenigstens einer Stirnseite offen ist und an einer Positioniereinrichtung angeordnet ist,
**dadurch gekennzeichnet,**
- daß der Hohlkörper (150) in einem Dampferzeuger (144) einführbar ist,
- daß die Positioniereinrichtung teilweise in den Dampferzeuger einführbar ist, und
- daß die Positioniereinrichtung einen verschiebbaren Galgen (152) umfaßt, an dem der Hohlkörper (150) mit einem seiner Enden schwenkbar angeordnet ist,
- wobei der Hohlkörper (150) mit Hilfe der Positioniereinrichtung an einer Öffnung der Rohrleitung (140) derart positionierbar ist, daß der Rohrinnenmanipulator (2) selbsttätig in die Rohrleitung (140) einfahren kann.

6. Einrichtung nach Anspruch 5, bei der als Hohlkörper (150) ein Hohlzylinder vorgesehen ist.

## Claims

1. Method for inserting a self-propelled pipe-interior manipulator (2) into a pipeline (140) branching off from a nuclear steam generator (144), in which method is used a hollow body (150) which receives the pipe-interior manipulator (2) and is open on at least one end face, characterised
- in that the hollow body (150) is positioned in the steam generator (144) at an opening of the pipeline (140), and
- in that from the hollow body (150), the pipe-interior manipulator (2) drives automatically into the pipeline (140).

2. Method according to claim 1, in which a hollow cylinder is used as the hollow body (150).

3. Method according to claim 1 or 2, in which the hollow body (150) is positioned centrally with respect to the opening of the pipeline (140).

4. Method according to one of the preceding claims in which the hollow body (150)
a) is fixed on a boom (152) in a manner such that it can swivel,
b) with the aid of this boom (152) is inserted through a manhole (146) of the steam generator (144) into the steam generator (144), and
c) there, by displacement of the boom (152) and by swivelling, is positioned over an opening of the pipeline (140) in such a way that the centre axis of the hollow body (150) and the centre axis of the pipeline (140) are substantially in alignment with each other in the region of this opening.

5. Device for inserting a self-propelled pipe-interior manipulator (2) into the interior of a pipeline (140), which device, for receiving the pipe-interior manipulator (2), comprises a hollow body (150) which is open on at least one end face and is arranged on a positioning device, characterised
- in that the hollow body (150) can be inserted into a steam generator (144),
- in that the positioning device can be inserted partially into the steam generator, and
- in that the positioning device comprises a displaceable boom (152) on which one of the ends of the hollow body (150) is arranged in a manner such that it can swivel,
- wherein with the aid of the positioning device, the hollow body (150) can be positioned at an opening of the pipeline (140) in such a way that the pipe-interior manipulator (2) can drive automatically into the pipeline (140).

6. Device according to claim 5, in which a hollow cylinder is provided as the hollow body (150).

## Revendications

1. Procédé pour introduire un manipulateur (2) autopropulsé à l'intérieur d'une conduite (140) bifurquant d'un générateur (144) nucléaire de vapeur, suivant lequel on utilise un corps (150) creux ouvert sur au moins un coté frontal, recevant le manipulateur (2), **caractérisé**
en ce que le corps (150) creux est positionné dans le générateur (144) de vapeur devant une ouverture de la conduite (140),
et en ce que le manipulateur (2) pénètre automatiquement à l'intérieur de la conduite (140) à partir du corps (150) creux.

2. Procédé suivant la revendication 1, suivant lequel on utilise un cylindre creux comme corps (150) creux.

3. Procédé suivant la revendication 1 ou 2, suivant lequel le corps (150) creux est positionné centralement par rapport à l'ouverture de la conduite (140).

4. Procédé suivant l'une des revendications précédentes, suivant lequel le corps (150) creux
a) est fixé à pivotement sur une potence (152),
b) est introduit à l'aide de cette potence (152) dans le générateur (144) de vapeur par un trou (146) d'homme du générateur (144) de vapeur,
c) et y est, en déplaçant en translation la potence (152) et en le faisant pivoter, positionné au-dessus d'une ouverture de la conduite (140) de telle sorte que l'axe médian du corps (150) creux et l'axe médian de la conduite (140) sont au moins approximativement alignés dans la région de cette ouverture.

5. Dispositif pour introduire un manipulateur (2) autopropulsé à l'intérieur d'une conduite (140), qui comprend un corps (150) creux, qui est destiné à recevoir le manipulateur (2), est ouvert sur au moins un côté frontal et est disposé sur un dispositif de positionnement, **caractérisé**
- en ce que le corps (150) creux peut être introduit dans un générateur (144) de vapeur,
- en ce que le dispositif de positionnement peut être partiellement introduit dans le générateur de vapeur,
- et en ce que le dispositif de positionnement comprend une potence (152) mobile en translation, sur laquelle le corps (150) creux est disposé à pivotement par une de ses extrémités,
- le corps (150) creux pouvant, à l'aide du dispositif de positionnement, être positionné devant une ouverture de la conduite (140) de telle sorte que le manipulateur (2) peut pénétrer automatiquement à l'intérieur de la conduite (140).

6. Dispositif suivant la revendication 5, suivant lequel un cylindre creux est prévu comme corps (150) creux.
